# EUROPEAN PATENT APPLICATION

(11) **EP 3 199 890 A1**
(43) Date of publication of application: **02.08.2017**
(21) Application number: 16153129.8
(22) Date of filing: 28.01.2016
(51) Int. Cl.: F25B 25/00, F25B 25/02, F25B 15/00, F25B 49/00, F25B 1/00

(54) **METHOD AND RELATED SYSTEM FOR IMPROVING ENERGY EFFICIENCY OF MARINE VESSELS**

(71) Applicant: Gadlab Engineering Oy, 00620 Helsinki (FI)
(72) Inventor: Mattsson, Jorma, 00620 Helsinki (FI); Nuotio, Markus, 00620 Helsinki (FI); Mattsson, Jukka, 00620 Helsinki (FI)
(74) Representative: LEITZINGER OY

(57) **Abstract**

The invention is based on the idea of using an absorption type chiller unit for pre-chilling a liquid input to a compressor driven chiller unit in a cooling system of a marine vessel. Absorption type chiller units need input energy in form of thermal energy and there is a lot of excess thermal energy available in this environment. A method, system and use of an absorption type chiller unit are claimed.

## Description

### FIELD OF THE INVENTION

The present invention relates to a method of improving energy efficiency of marine vessels, and particularly to a method for reducing workload of a compressor in a compressor driven chiller unit of a cooling system. The present invention relates also to a system for implementing said method.

### BACKGROUND OF THE INVENTION

Typically combustion engines, such as Otto engines, diesel engines or gas turbines, are used for generating electricity with a generator, and mechanical power for propulsion of the vessel. A portion of the generated electricity or mechanical power is used for driving a compressor of a compressor driven chiller unit for cooling certain areas or spaces of the vessel, such as passenger cabins. It is well known that combustion engines in general, produce a lot of surplus heat. Small portion of this surplus heat can be used for heating purposes within the vessel but most of the surplus heat is waste heat.

One of the problems associated with the above arrangement is that most of the heat is transferred in to the sea where the ship is sailing and a lot of energy is wasted. Heated cooling liquid of the combustion engines has typically a temperature just below 100 degrees Celsius and it has been traditionally considered as a problem of temperature stability which is solved by constant heat transfer into the sea.

### BRIEF DESCRIPTION OF THE INVENTION

An object of the present invention is to provide a method and a system for implementing the method so as to alleviate the above disadvantages. The objects of the invention are achieved by a method and system which are characterized by what is stated in the independent claims. The preferred embodiments of the invention are disclosed in the dependent claims.

The invention is based on the idea of using an absorption type chiller unit for pre-chilling a liquid input to a compressor driven chiller unit in a cooling system of a marine vessel. Absorption type chiller units need input energy in form of thermal energy and there is a lot of excess thermal energy available in this environment.

An advantage of the method and system of the invention is that the surplus heat of the combustion engines can be used as an energy source for the absorption type chiller unit. Thus it is in practice free energy as the surplus heat would otherwise be transferred to the sea in order to maintain suitable running temperature of the combustion engines. Pre-chilling of any liquid fed to the compressor driven chiller unit lowers the amount of work needed from the compressor for reaching a certain temperature output. In best cases the compressor driven chiller unit can be shut down or by-passed if output power of the absorption type chiller unit is high enough or the chilling need is low enough. This also extends the lifetime of the compressor and reduces service costs.

### BRIEF DESCRIPTION OF THE DRAWINGS

In the following the invention will be described in greater detail by means of preferred embodiments with reference to the accompanying drawings, in which
Figure 1 illustrates a cooling system according to an embodiment of the invention;
Figure 2 illustrates the cooling system of Figure 1 in detail;
Figure 3 illustrates a cooling system according to another embodiment of the invention;
Figure 4 illustrates the cooling system of Figure 3 in detail;

### DETAILED DESCRIPTION OF THE INVENTION

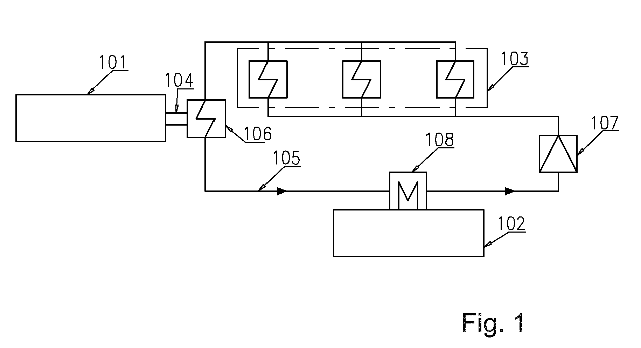

Figure 1 illustrates a simplified version of main components of a cooling system according to an embodiment of the invention. The cooling system may refer to a payload cooling system which is used for cooling cargo or cargo space and/or passenger cabins and other areas where passengers are present. The cooling system may also refer to an air conditioning system which is used for cooling cargo space and/or passenger cabins and other areas where passengers are present with air conditioning units. These definitions apply throughout this document.

The system is based on a circulation of a chilled liquid which transfer heat from consumers 103 to chiller units 101 and 102. A first liquid circuit 105, namely cooling system chilled liquid circuit, circulating a first liquid is provided for receiving heat from consumers 103. The consumers can be for example heat exchangers or air conditioning units in passenger cabins or cargo spaces or refrigeration units in refrigeration rooms or cargo spaces. As the first liquid receives heat from consumers, the consumers are chilled. The first liquid flows from consumers to a pre-heat exchanger 106 by means of a circulation pump 107 which is arranged to pump the first liquid in the first liquid circuit 105. The system further comprises an absorption type chiller unit 101 that is thermally connected to the pre-heat exchanger 106 with a second liquid circuit 104, namely an absorption type chiller unit chilled liquid circuit, circulating a second liquid. The second liquid is circulated within the second liquid circuit 104 for transferring heat from the pre-heat exchanger 106 to the absorption type chiller unit 101. The pre-heat exchanger 106 transfers heat from the first liquid circuit 105 to the second liquid circuit 104 thereby pre-chilling the first liquid before the pre-chilled liquid flows to a heat exchanger 108. The system further comprises a compressor driven chiller unit 102 that is thermally connected to the heat exchanger 108 for transferring heat from the first liquid flowing through the heat exchanger 108 to the compressor driven chiller unit 102, thereby chilling the first liquid before it flows again to the consumers 103.

The system is preferably controlled by monitoring temperature of the first liquid before and/or after one or more heat transfers that occur in this example at consumers 103, at pre-heat exchanger 106 and at heat exchanger 108. Operation of one or more chiller units 101, 102 is then controlled based on the temperatures so that a target temperature for the first liquid is reached for example between the heat exchanger 108 and consumers 103. A significant benefit is achieved by monitoring the temperature of the first liquid and controlling operation of the chiller units based on the temperature. The absorption type chiller unit can be operated so that it transfers as much heat from the first liquid as possible thereby providing maximum chilling of the first liquid. The compressor driven chiller unit is then controlled based on the temperature of the first liquid after the pre-heat exchanger. If further chilling of the first liquid is required in order to reach the target temperature, the compressor driven chiller unit is controlled to provide the required chilling. However, if the absorption type chiller unit is able to drive the temperature of the first liquid to or below the target temperature, then the compressor driven chiller unit can be stopped to save energy as long as the condition prevails.

The system is particularly beneficial in large scale chilling needs in an environment where a significant amount of surplus heat is produced. This is a typical situation in marine vessels where combustion engines are used for generating electricity and/or mechanical power for propulsion of the vessel. A portion of the generated electricity or mechanical power can be used for driving a compressor of the compressor driven chiller unit and surplus heat of the combustion engine(s) can be used as an energy source for the absorption type chiller unit. Thus the energy for the absorption type chiller unit is in practice free energy as the surplus heat would otherwise be transferred to the sea in order to maintain suitable running temperature of the combustion engine(s). Efficiency of absorption type chiller units is not ideal but any chilling achieved with the absorption type chiller unit reduces workload of the compressor driven chiller unit which in turn reduces workload of the combustion engine(s) and saves energy, for example diesel fuel. In an embodiment, it has been calculated that the system could potentially reduce fuel consumption of a passenger ship from 3 to 8 percent in a warm climate where sea water temperature exceeds 12 degrees Celsius. The efficiency of the system increases when sea water is warmer as for example refrigerant circuit of the compressor driven chiller unit is cooled with sea water.

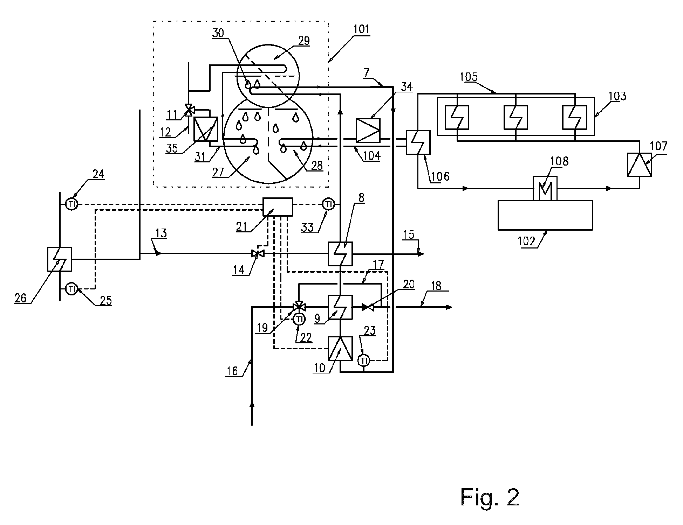

Figure 2 illustrates the cooling system of Figure 1 in greater detail. A first liquid circuit 105, namely cooling system chilled liquid circuit, circulating a first liquid is provided for receiving heat from consumers 103. The consumers can be for example heat exchangers or air conditioning units in passenger cabins or refrigeration units in refrigeration rooms. As the first liquid receives heat from consumers, the consumers are chilled. The first liquid flows from consumers to a pre-heat exchanger 106 by means of a circulation pump 107 which is arranged to pump the first liquid in the first liquid circuit 105. The system further comprises an absorption type chiller unit 101 that is thermally connected to the pre-heat exchanger 106 with a second liquid circuit 104, namely an absorption type chiller unit chilled liquid circuit, circulating a second liquid by means of a circulation pump 34 which is arranged to pump the second liquid in the second liquid circuit 104. The second liquid is circulated within the second liquid circuit 104 for transferring heat from the pre-heat exchanger 106 to an evaporator 28 of the absorption type chiller unit 101. The pre-heat exchanger 106 transfers heat from the first liquid circuit 105 to the second liquid circuit 104 thereby pre-chilling the first liquid before the pre-chilled liquid flows to a heat exchanger 108. The system further comprises a compressor driven chiller unit 102 that is thermally connected to the heat exchanger 108 for transferring heat from the first liquid flowing through the heat exchanger 108 to the compressor driven chiller unit 102, thereby chilling the first liquid before it flows again to the consumers 103.

The absorption type chiller unit 101 receives energy for operation from a heated liquid circuit 7 in which a liquid is circulated by means of a heated liquid circulation pump 10. The liquid in heated liquid circuit receives heat from hot temperature water heat exchanger 9 and from steam heat exchanger 8. The received heat is delivered to a condenser 30 of an absorption type chiller unit generator 29 which draws heat from the heated liquid circuit 7. The heated liquid circuit 7 receives heat from steam input 13 through steam heat exchanger 8 and from hot temperature liquid 16 through hot temperature liquid heat exchanger 9. The steam input 13 is controlled with a steam control valve 14 which is controlled by a control unit 21. The steam input is released to the steam heat exchanger 8 and from there to steam output 15 by controlling the steam control valve 14. Any surplus steam is condensed by a steam surplus condenser 26. Input and output to the steam surplus condenser are monitored with temperature indicators 24 and 25 connected to the control unit 21.

The hot temperature liquid input 16 can be for example cooling liquid of a combustion engine and thermal energy of the hot temperature liquid essentially surplus heat of the combustion engine. Other energy sources can be used as well. The hot temperature liquid input is connected to a three-way valve 19 of a hot temperature by-pass circuit 17. The hot temperature by-pass circuit 17 can by-pass the hot temperature liquid heat exchanger and direct the hot temperature liquid straight to hot temperature liquid output 18. The three-way valve is controlled based on temperature of the hot temperature liquid at the three-way valve 19 by measuring the temperature with a temperature indicator 22 connected to the control unit 21. A non-return valve 20 prevents the hot temperature liquid from flowing to the hot temperature liquid heat exchanger 9 from the hot temperature by-pass circuit 17. The hot temperature liquid returning from the condenser 30 of the absorption type chiller unit has it's lowest temperature prior to the hot temperature liquid heat exchanger 9. The hot temperature liquid is heated first with the hot temperature heat exchanger 9 and after that it is further heated with the steam heat exchanger 8. Temperature of the hot temperature liquid is measured with a temperature indicator 23 prior to the hot temperature liquid heat exchanger 9 where the temperature of the hot temperature liquid is lowest. Temperature of the hot temperature liquid is also measured with a temperature indicator 33 after the steam heat exchanger 8 where the temperature of the hot temperature liquid is highest. Both temperature indicators 33 and 23 are connected to the control unit 21.

An absorption type chiller unit cooling liquid circuit 31 receives cooling liquid input 12 and circulates cooling liquid between absorber 27 and generator 29 by means of a cooling liquid circulation pump 35 and controlled by a three-way valve 11. The absorption type chiller unit 101 receives thermal energy, i.e. heat, from the second liquid circuit 104 by means of an evaporator 28 which is thermally connected to the absorber 27 of the absorption type chiller unit.

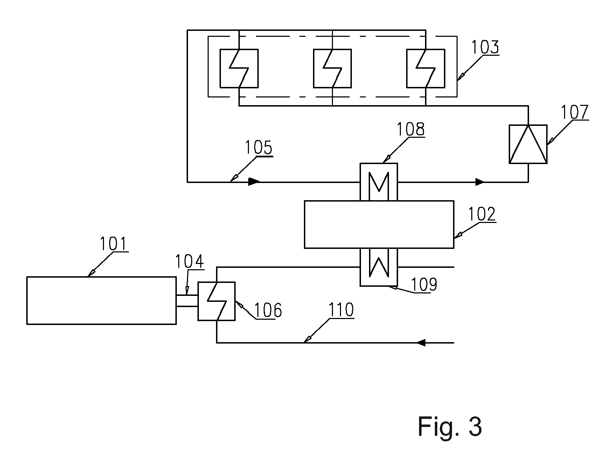

Figure 3 illustrates a simplified version of main components of a cooling system according to an embodiment of the invention. The system is based on a circulation of a chilled liquid which transfer heat from consumers 103 to chiller units 102. A first liquid circuit 105, namely cooling system chilled liquid circuit, circulating a first liquid is provided for receiving heat from consumers 103. The consumers can be for example heat exchangers or air conditioning units in passenger cabins or refrigeration units in refrigeration rooms. As the first liquid receives heat from consumers, the consumers are chilled. The first liquid flows from consumers to a heat exchanger 108 by means of a circulation pump 107 which is arranged to pump the first liquid in the first liquid circuit 105. The system comprises a compressor driven chiller unit 102 that is thermally connected to the heat exchanger 108 for transferring heat from the first liquid flowing through the heat exchanger 108 to the compressor driven chiller unit 102, thereby chilling the first liquid before it flows again to the consumers 103. Heat is transferred in the heat exchanger 108 from the first liquid circuit to refrigerant circuit of the compressor driven chiller unit 102.

The system further comprises an absorption type chiller unit 101 that is thermally connected to the pre-heat exchanger 106 with a second liquid circuit 104, namely an absorption type chiller unit chilled liquid circuit, circulating a second liquid. The second liquid is circulated within the second liquid circuit 104 for transferring heat from the pre-heat exchanger 106 to the absorption type chiller unit 101. The pre-heat exchanger 106 transfers heat from third liquid circuit 110, namely refrigerant cooling liquid circuit, to the second liquid circuit 104 thereby pre-chilling a third liquid circulating in the third liquid circuit 110. The third liquid can be for example sea water from sea that is typically used for cooling refrigerant circuit of the compressor driven chiller unit 102. In this case input of third liquid, e.g. sea water, is chilled with pre-heat exchanger 106 and the pre-chilled liquid then flows to a cooling exchanger 109. The pre-chilled liquid receives heat from the refrigerant circuit of the compressor driven chiller unit 102 and the output from the cooling exchanger 109 may flow back to the sea.

The system is preferably controlled by monitoring temperature of one or more liquids before and/or after one or more heat transfers that occur in this example at consumers 103, at pre-heat exchanger 106, at heat exchanger 108 and at cooling exchanger 109. Operation of one or more chiller units 101, 102 is then controlled based on the temperatures so that a target temperature for the first liquid is reached for example between the heat exchanger 108 and consumers 103.

A significant benefit is achieved by monitoring the temperature of the first liquid and controlling operation of the chiller units based on the temperature. The absorption type chiller unit is preferably operated so that it transfers as much heat from the third liquid, as possible thereby providing maximum chilling of the third liquid, i.e. the refrigerant cooling liquid. The compressor driven chiller unit is then controlled based on the temperatures of the first liquid prior to the heat exchanger, the third liquid after the pre-heat exchanger and/or the refrigerant after cooling exchanger. If further chilling of the first liquid is required in order to reach the target temperature and the temperature of the refrigerant is not low enough, the compressor driven chiller unit is controlled to provide the required chilling. However, if the absorption type chiller unit is able to drive the temperature of the third liquid low enough to cool the refrigerant to a temperature low enough that the target temperature of the first liquid can be reached without further chilling of the refrigerant, then the compressor driven chiller unit can be stopped to save energy as long as the condition prevails.

The system is particularly beneficial in large scale chilling needs in an environment where a significant amount of surplus heat is produced. This is a typical situation in marine vessels where combustion engines are used for generating electricity and/or mechanical power for propulsion of the vessel. A portion of the generated electricity or mechanical power can be used for driving a compressor of the compressor driven chiller unit and surplus heat of the combustion engine(s) can be used as an energy source for the absorption type chiller unit. Thus the energy for the absorption type chiller unit is in practice free energy as the surplus heat would otherwise be transferred to the sea in order to maintain suitable running temperature of the combustion engine(s). Efficiency of absorption type chiller units is far from ideal but any chilling of refrigerant cooling liquid achieved with the absorption type chiller unit reduces workload of the compressor driven chiller unit which in turn reduces workload of the combustion engine(s) and saves energy, for example diesel fuel.

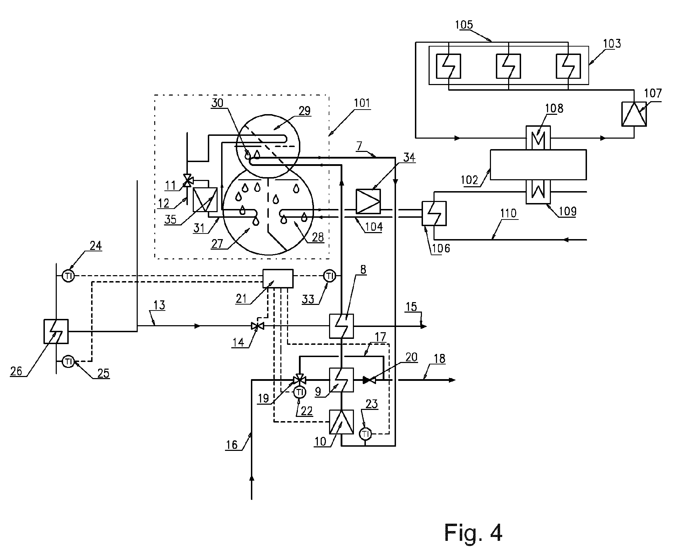

Figure 4 illustrates the cooling system of Figure 2 in greater detail. A first liquid circuit 105, namely cooling system chilled liquid circuit, circulating a first liquid is provided for receiving heat from consumers 103. The consumers can be for example heat exchangers or air conditioning units in passenger cabins or refrigeration units in refrigeration rooms. As the first liquid receives heat from consumers, the consumers are chilled. The first liquid flows from consumers to a heat exchanger 108 by means of a circulation pump 107 which is arranged to pump the first liquid in the first liquid circuit 105. The system comprises a compressor driven chiller unit 102 that is thermally connected to the heat exchanger 108 for transferring heat from the first liquid flowing through the heat exchanger 108 to the compressor driven chiller unit 102, thereby chilling the first liquid before it flows again to the consumers 103. Heat is transferred in the heat exchanger 108 from the first liquid circuit to refrigerant circuit of the compressor driven chiller unit 102.

The system further comprises an absorption type chiller unit 101 that is thermally connected to the pre-heat exchanger 106 with a second liquid circuit 104, namely an absorption type chiller unit chilled liquid circuit, circulating a second liquid. The second liquid is circulated within the second liquid circuit 104 for transferring heat from the pre-heat exchanger 106 to the absorption type chiller unit 101. The pre-heat exchanger 106 transfers heat from third liquid circuit 110, namely refrigerant cooling liquid circuit, to the second liquid circuit 104 thereby chilling a third liquid circulating in the third liquid circuit 110. The third liquid can be for example sea water from sea that is typically used for cooling refrigerant circuit of the compressor driven chiller unit 102. In this case input of third liquid, e.g. sea water, is chilled with pre-heat exchanger 106 and then the third liquid, i.e. pre-chilled liquid, flows to a cooling exchanger 109. The pre-chilled liquid receives heat from the refrigerant circuit of the compressor driven chiller unit 102 and the output from the cooling exchanger 109 may flow back to the sea.

The absorption type chiller unit 101 receives energy for operation from a heated liquid circuit 7 in which a liquid is circulated by means of a heated liquid circulation pump 10. The liquid in heated liquid circuit receives heat from hot temperature water heat exchanger 9 and from steam heat exchanger 8. The received heat is delivered to a condenser 30 of an absorption type chiller unit generator 29 which draws heat from the heated liquid circuit 7. The heated liquid circuit 7 receives heat from steam input 13 through steam heat exchanger 8 and from hot temperature liquid 16 through hot temperature liquid heat exchanger 9. The steam input 13 is controlled with a steam control valve 14 which is controlled by a control unit 21. The steam input is released to the steam heat exchanger 8 and from there to steam output 15 by controlling the steam control valve 14. Any surplus steam is condensed by a steam surplus condenser 26. Input and output to the steam surplus condenser are monitored with temperature indicators 24 and 25 connected to the control unit 21.

The hot temperature liquid input 16 can be for example cooling liquid of a combustion engine and thermal energy of the hot temperature liquid essentially surplus heat of the combustion engine. Other energy sources can be used as well. The hot temperature liquid input is connected to a three-way valve of a hot temperature by-pass circuit 17. The hot temperature by-pass circuit can by-pass the hot temperature liquid heat exchanger and direct the hot temperature liquid straight to hot temperature liquid output 18. The three-way valve is controlled based on temperature of the hot temperature liquid at the three-way valve by measuring the temperature with a temperature indicator 22 connected to the control unit 21. A non-return valve 20 prevents the hot temperature liquid from flowing to the hot temperature liquid heat exchanger 9 from the hot temperature by-pass circuit 17. The hot temperature liquid returning from the condenser 30 of the absorption type chiller unit has it's lowest temperature prior to the hot temperature liquid heat exchanger 9. The hot temperature liquid is heated first with the hot temperature heat exchanger 9 and after that it is further heated with the steam heat exchanger 8. Temperature of the hot temperature liquid is measured with a temperature indicator 23 prior to the hot temperature liquid heat exchanger 9 where the temperature of the hot temperature liquid is lowest. Temperature of the hot temperature liquid is also measured with a temperature indicator 19 after the steam heat exchanger 8 where the temperature of the hot temperature liquid is highest. Both temperature indicators 19 and 23 are connected to the control unit 21.

An absorption type chiller unit cooling liquid circuit 31 receives cooling liquid input 12 and circulates cooling liquid between absorber 27 and generator 29 by means of a cooling liquid circulation pump 35 and controlled by a three-way valve 11. The absorption type chiller unit 101 receives thermal energy, i.e. heat, from the second liquid circuit 104 by means of an evaporator 28 which is thermally connected to the absorber 27 of the absorption type chiller unit.

A first aspect of the invention is a method of reducing workload of a compressor in a compressor driven chiller unit 102 of a cooling system. The method comprises steps of providing a circulation 105 of a first liquid; operating a compressor driven chiller unit 102 for chilling a heat exchanger 108 of the compressor driven chiller unit 102; circulating the first liquid through the heat exchanger 108 of the compressor driven chiller unit 102 for chilling the first liquid; circulating the first liquid through a cooling unit 103 for providing cooling to a consumer. The method further comprises steps of operating an absorption type chiller unit 101 for chilling a pre-heat exchanger 106 of the absorption type chiller unit 101; circulating a liquid to be pre-chilled through the pre-heat exchanger 106 of the absorption type chiller unit 101 for pre-chilling said liquid; and providing the pre-chilled liquid to the compressor driven chiller unit 102.

In an embodiment the liquid to be pre-chilled is the first liquid and the circulation 105 of the first liquid is arranged to flow from the pre-heat exchanger 106 of the absorption type chiller unit 101 to the heat exchanger 108 of the compressor driven chiller unit and from there to the consumer cooling unit 103 before returning to the pre-heat exchanger 106 of the absorption type chiller unit 101. In an embodiment the liquid to be pre-chilled is cooling liquid in refrigerant cooling liquid circuit 110 for cooling refrigerant of the compressor driven chiller unit 102 and the pre-chilled liquid is provided to a cooling exchanger 109 of the compressor driven chiller unit 102.

In an embodiment the cooling system is operated in a marine vessel in interaction with a combustion engine of the marine vessel, wherein the combustion engine provides energy 15, 16 for operating the cooling system. The provided energy can be for example, thermal energy in form of heated water or steam, mechanical energy or electric energy. In an embodiment a heated liquid circulation 7 is provided between the combustion engine of the marine vessel and the absorption chiller unit 101, wherein the heated liquid circulation 7 transfers thermal energy from the combustion engine to the absorption chiller unit 101.

In an embodiment operation of the compressor driven chiller unit 102 is controlled based on temperatures of one or more input liquids of the compressor driven chiller unit 102. For example temperature of pre-chilled liquid of the first liquid circulation 105 or temperature of pre-chilled liquid of refrigerant cooling liquid circuit 110 can be used as a signal for controlling the compressor driven chiller unit 102. The controlling can be used to provide constant temperature output to the first liquid circulation 105 from the heat exchanger 108 regardless of the input liquid temperatures to the compressor driven chiller unit 102.

A second aspect of the invention is a cooling system for a marine vessel. The cooling system comprises a chilled liquid circuit 105 and a circulation pump 107 in the chilled liquid circuit 105 for circulating a chilled liquid in the chilled liquid circuit 105, compressor driven chiller unit 102 having a heat exchanger 108 connected to the chilled liquid circuit 105 and configured to provide chilling of the chilled liquid with the compressor driven chiller unit 102, consumer heat exchangers 103 connected to the chilled liquid circuit 105 and configured to provide chilling to consumers by transferring heat from the consumers to the chilled liquid. The system further comprises an absorption type chiller unit having a pre-heat exchanger 106 connected to the chilled liquid circuit 105 and configured to provide pre-chilling of the chilled liquid between the consumer heat exchangers 103 and the heat exchanger 108.

A third aspect of the invention is use of an absorption type chiller unit for pre-chilling a chilled liquid circuit of a cooling system prior to a compressor driven chiller unit.

It will be obvious to a person skilled in the art that, as the technology advances, the inventive concept can be implemented in various ways. The invention and its embodiments are not limited to the examples described above but may vary within the scope of the claims.

## Claims

1. A method of reducing workload of a compressor in a compressor driven chiller unit (102) of a cooling system, wherein the method comprises steps of:
- providing a circulation (105) of a first liquid,
- operating a compressor driven chiller unit (102) for chilling a heat exchanger (108) of the compressor driven chiller unit (102),
- circulating the first liquid through the heat exchanger (108) of the compressor driven chiller unit (102) for chilling the first liquid,
- circulating the first liquid through a cooling unit (103) for providing cooling to a consumer,
**characterized by**
- operating an absorption type chiller unit (101) for chilling a pre-heat exchanger (106) of the absorption type chiller unit (101),
- circulating a liquid to be pre-chilled through the pre-heat exchanger (106) of the absorption type chiller unit (101) for pre-chilling said liquid, and
- providing the pre-chilled liquid to the compressor driven chiller unit (102).

2. A method according to claim 1, **characterized in that** the cooling system is a payload cooling system.

3. A method according to claim 1, **characterized in that** the cooling system is an air conditioning system and the cooling unit (103) is an air conditioning unit.

4. A method according to any one of claims 1 to 3, **characterized in that** the liquid to be pre-chilled is the first liquid and the circulation (105) of the first liquid is arranged to flow from the pre-heat exchanger (106) of the absorption type chiller unit (101) to the heat exchanger (108) of the compressor driven chiller unit and from there to the consumer cooling unit (103) before returning to the pre-heat exchanger (106) of the absorption type chiller unit (101).

5. A method according to any one of claims 1 to 3, **characterized in that** the liquid to be pre-chilled is cooling liquid in refrigerant cooling liquid circuit (110) for cooling refrigerant of the compressor driven chiller unit (102) and the pre-chilled liquid is provided to a cooling exchanger (109) of the compressor driven chiller unit (102).

6. A method according to any one of claims 1 to 5, **characterized by** operating the air conditioning system in a marine vessel in interaction with a combustion engine of the marine vessel, wherein the combustion engine provides energy (15, 16) for operating the cooling system.

7. A method according to claim 6, **characterized by** providing a heated liquid circulation (7) between the combustion engine of the marine vessel and the absorption chiller unit (101), wherein the heated liquid circulation (7) transfers thermal energy from the combustion engine to the absorption chiller unit (101).

8. A method according to any one of claims 1 to 7, **characterized by** controlling operation of the compressor driven chiller unit (102) based on temperatures of one or more input liquids of the compressor driven chiller unit (102).

9. A cooling system for a marine vessel wherein the cooling system comprises a chilled liquid circuit (105) and a circulation pump (107) in the chilled liquid circuit (105) for circulating a chilled liquid in the chilled liquid circuit (105), compressor driven chiller unit (102) having a heat exchanger (108) connected to the chilled liquid circuit (105) and configured to provide chilling of the chilled liquid with the compressor driven chiller unit (102), consumer heat exchangers (103) connected to the chilled liquid circuit (105) and configured to provide chilling to consumers by transferring heat from the consumers to the chilled liquid,
**characterized in that** the system further comprises an absorption type chiller unit having a pre-heat exchanger (106) connected to the chilled liquid circuit (105) and configured to provide pre-chilling of the chilled liquid between the consumer heat exchangers (103) and the heat exchanger (108).

10. A cooling system according to claim 9, **characterized in that** the system is a payload cooling system of a marine vessel.

11. A cooling system according to claim 9, **characterized in that** the system is an air conditioning system of a marine vessel.

12. Use of an absorption type chiller unit for pre-chilling a chilled liquid circuit of a cooling system prior to a compressor driven chiller unit.

13. Use of an absorption type chiller unit according to claim 12, **characterized in that** the system is a payload cooling system of a marine vessel.

14. Use of an absorption type chiller unit according to claim 12, **characterized in that** the system is an air conditioning system of a marine vessel.

## Amended claims

### Amended claims in accordance with Rule 137(2) EPC.

1. A method of reducing workload of a compressor in a compressor driven chiller unit (102) of a cooling system, wherein the method comprises steps of:
providing a circulation (105) of a first liquid,
operating a compressor driven chiller unit (102) for chilling a heat exchanger (108) of the compressor driven chiller unit (102),
circulating the first liquid through the heat exchanger (108) of the compressor driven chiller unit (102) for chilling the first liquid,
circulating the first liquid through a cooling unit (103) for providing cooling to a consumer,
operating an absorption type chiller unit (101) for chilling a pre-heat exchanger (106) of the absorption type chiller unit (101),
circulating a liquid to be pre-chilled through the pre-heat exchanger (106) of the absorption type chiller unit (101) for pre-chilling said liquid, and
providing the pre-chilled liquid to the compressor driven chiller unit (102),
**characterized in that**
operating the absorption type chiller unit (101) to provide maximum chilling of the first liquid, and
controlling operation of the compressor driven chiller unit (102) based on temperature of the first liquid (support in claim 8) after pre-heat exchanger (106) but before heat exchanger (108) so that a target temperature for the first liquid is reached between the heat exchanger (108) and consumers (103).

2. A method according to claim 1, **characterized in that** the cooling system is a payload cooling system.

3. A method according to claim 1, **characterized in that** the cooling system is an air conditioning system and the cooling unit (103) is an air conditioning unit.

4. A method according to any one of claims 1 to 3, **characterized in that** the liquid to be pre-chilled is the first liquid and the circulation (105) of the first liquid is arranged to flow from the pre-heat exchanger (106) of the absorption type chiller unit (101) to the heat exchanger (108) of the compressor driven chiller unit and from there to the consumer cooling unit (103) before returning to the pre-heat exchanger (106) of the absorption type chiller unit (101).

5. A method according to any one of claims 1 to 3, **characterized in that** the liquid to be pre-chilled is cooling liquid in refrigerant cooling liquid circuit (110) for cooling refrigerant of the compressor driven chiller unit (102) and the pre-chilled liquid is provided to a cooling exchanger (109) of the compressor driven chiller unit (102).

6. A method according to any one of claims 1 to 5, **characterized by** operating the air conditioning system in a marine vessel in interaction with a combustion engine of the marine vessel, wherein the combustion engine provides energy (15, 16) for operating the cooling system.

7. A method according to claim 6, **characterized by** providing a heated liquid circulation (7) between the combustion engine of the marine vessel and the absorption chiller unit (101), wherein the heated liquid circulation (7) transfers thermal energy from the combustion engine to the absorption chiller unit (101).

8. A cooling system for a marine vessel wherein the cooling system comprises a chilled liquid circuit (105) and a circulation pump (107) in the chilled liquid circuit (105) for circulating a chilled liquid in the chilled liquid circuit (105), compressor driven chiller unit (102) having a heat exchanger (108) connected to the chilled liquid circuit (105) and configured to provide chilling of the chilled liquid with the compressor driven chiller unit (102), consumer heat exchangers (103) connected to the chilled liquid circuit (105) and configured to provide chilling to consumers by transferring heat from the consumers to the chilled liquid, wherein the system further comprises an absorption type chiller unit having a pre-heat exchanger (106) connected to the chilled liquid circuit (105) and configured to provide pre-chilling of the chilled liquid between the consumer heat exchangers (103) and the heat exchanger (108), **characterized in that** the absorption type chiller unit (101) is configured to provide maximum chilling of the first liquid, and the compressor driven chiller unit (102) is configured to be controlled based on temperature of the first liquid after pre-heat exchanger (106) but before heat exchanger (108) for reaching a target temperature for the first liquid between the heat exchanger (108) and consumers (103).

9. A cooling system according to claim 8, **characterized in that** the system is a payload cooling system of a marine vessel.

10. A cooling system according to claim 8, **characterized in that** the system is an air conditioning system of a marine vessel.
